# EUROPÄISCHE PATENTSCHRIFT

(11) **EP 0 995 918 B1**
(45) Veröffentlichungstag und Bekanntmachung des Hinweises auf die Patenterteilung: **15.09.2004**
(21) Anmeldenummer: 99120774.7
(22) Anmeldetag: 20.10.1999
(51) Int. Cl.: F16D 33/18

(54) **Hydrodynamische Kupplung**
Hydrodynamic clutch
Accouplement hydrodynamique

(30) Priorität: 21.10.1998 DE 19848541
(43) Veröffentlichungstag der Anmeldung: 26.04.2000
(73) Patentinhaber: Voith Turbo GmbH & Co. KG, 89522 Heidenheim (DE)
(72) Erfinder: Adleff, Kurt, 74564 Crailsheim (DE); Hoffeld, Harald, 74564 Crailsheim (DE)
(74) Vertreter: Koch, Annegret Christa

(56) Entgegenhaltungen:
- DE-A- 3 002 804
- DE-A- 19 802 524
- DE-A- 19 809 598
- DE-U- 8 613 508
- GB-A- 1 151 216
- US-A- 5 778 668

## Beschreibung

Die Erfindung betrifft eine hydrodynamische Kupplung, im einzelnen mit den Merkmalen des Oberbegriffs des Anspruchs 1.

Hydrodynamische Kupplungen sind für eine Vielzahl von Anwendungsfällen in einer Vielzahl von Ausführungen bekannt. Ein Anwendungsfall einer hydrodynamischen Kupplung in einem Turbocompoundsystem ist in der Druckschrift DE 92 02 578.1 offenbart. Diese Kupplung ist an den Schmierölkreislauf der Verbrennungskraftmaschine angeschlossen und nutzt dessen Öl als Arbeits- und als Kühlmittel.

DE 198 02 524 beschreibt eine hydrodynamische Kupplung, bei welcher der aus Rotor und Stator gebildete Arbeitsraum direkt über die Abtriebswelle mit Öl versorgt ist. Das Öl gelangt dabei durch eine Bohrung in der Abtriebswelle sowie über radiale Verteilbohrungen in den Arbeitsraum. Das Pumpenrad ist hierbei auf der Abtriebswelle mittels Wälzlagern gelagert. Ein Teil des Ölstromes, der zum Arbeitsraum geführt wird, wird abgezweigt und den Lagern zur Schmierung zugeführt. Die Abstützung erfolgt dabei vorzugsweise über eine Lageranordnung, umfassend wenigstens ein Lager, vorzugsweise zwei Lager, wobei vorzugsweise aufgrund der guten Aufnahmefähigkeit für kombinierte Belastungen Schrägkugellager verwendet werden. Die Schrägkugellager werden dabei paarweise nebeneinander angeordnet. Die Anordnung dieser Lagerung erfolgt dabei in radialer Richtung unterhalb des vom Pumpenrad beschriebenen Arbeitsraumteiles. In axialer Richtung in Einbaulage betrachtet erfolgt die Anordnung der Lagerung vorzugsweise im Bereich der Trennebene, welche von der Beschaufelung von Pumpenrad und Turbinenrad gebildet wird. Zur Betriebsmittelversorgung ist eine sich durch die Abtriebswelle erstreckende Zentralbohrung vorgesehen, von welcher sich in radialer Richtung in Umfangsrichtung der Abtriebswelle Verteilkanäle erstrecken. Diese sind in Einbaulage der Kupplung derart angeordnet, daß diese ebenfalls im Bereich der Trennebene zwischen Turbinen- und Pumpenrad liegen. Die Verteilkanäle münden in einen von Pumpen- und Turbinenrad in Einbaulage beschriebenen und dem torusförmigen Arbeitsraum vorgelagerten Zufuhrraum. Dieser wird in axialer Richtung vom Turbinenrad sowie auf seiten des Pumpenrades im wesentlichen von der Lageranordnung begrenzt. Zur Realisierung einer Teilstromabzweigung für die Lageranordnung sind entsprechende Mittel im Betriebsmittelzufuhrraum vorgesehen. Diese können beispielsweise in Form einer Scheibe mit im Querschnitt abgeschrägter Innenkontur ausgeführt sein. Der dadurch entstehende Durchlaß dient der Dosierung des Schmiermittelflusses durch die Lager.

Die Kupplung ist dabei an den Schmierölkreislauf eines Verbrennungsmotors angeschlossen. Das Öl des Verbrennungsmotors wird dabei gleichzeitig in der Kupplung als Arbeitsmittel sowie als Kühlmittel ausgenutzt.

Die genannten Lager sind für die Lebensdauer der gesamten Kupplung entscheidend. Es ist daher auf deren ausreichende Dimensionierung sowie auf den richtigen Einbau zu achten, insbesondere auch auf die Wartung und auf die ausreichende Schmierung. Die Lebensdauer der Lager selbst hat bisher jedoch nicht befriedigt. Es kommt immer wieder zu Ausfällen. Man versuchte, das Problem durch Verwendung größerer Lager zu begegnen, jedoch ohne Erfolg.

US 5,778,668, zeigt eine hydrodynamische Kupplung mit den Merkmalen des Oberbegriffs von Anspruch 1.

DE 30 02 804 A1 beschreibt eine hydrodynamische Kupplung für den Antrieb von Bändern, welche unter Tage eingesetzt wird. Diese hydrodynamische Kupplung verwendet als Arbeitsmedium wasser, so dass spezielle abgedichtete, fettgeschmierte Lager verwendet werden müssen.

Der Erfindung liegt die Aufgabe zugrunde, eine hydrodynamische Kupplung der genannten Art, insbesondere für den Einatz in Fahrzeugen, derart zu gestalten, daß die Lebensdauer der Lager entscheidend verbessert wird. Eine einfache konstruktive Ausführung mit geringer Bauteilanzahl und geringem Bauraumbedarf sind beizubehalten.

Diese Aufgabe wird durch die Merkmale von Anspruch 1 gelöst.

Die Erfinder haben erkannt, daß die geringe Viskosität des Öls die Ursache des Übels ist, aber auch Ablagerungen, die im Öl enthalten sind. Dies kann während des Betriebes schon sehr bald zu Lagerschäden führen.

Sie haben daraufhin die entsprechenden Maßnahmen getroffen. Sie sind nämlich von der an sich sehr praktischen Schmierung mittels des Öles, das als Arbeitsmedium dient, abgegangen und zu einer Fettschmierung übergegangen. Sie haben außerdem die Lager in zuverlässiger Weise abgedichtet, so daß es gegen Eindringen von Öl und damit gegen Ablagerungen geschützt ist. Durch diese verhältnismäßig einfachen Maßnahmen konnte die Lebensdauer gegenüber vorbekannten Turbokupplungen um ein Mehrfaches gesteigert werden.

Die erfindungsgemäße Lösung ist sowohl für den Einsatz in Fahrzeugen als auch in stationären Anlagen einsetzbar.

Die Erfindung ist anhand der Zeichnung näher erläutert. Darin ist eine hydrodynamische Kupplung dargestellt, die im sogenannten Turbocompoundsystem betrieben wird, wobei das Arbeitsmedium der Kupplung gleichzeitig als Schmieröl eines zugeordneten Verbrennungsmotors dient, gegebenenfalls auch eines zugeordneten Getriebes.

Die hydrodynamische Kupplung 1 umfaßt ein Primärrad 3, welches auch als Pumpenrad bezeichnet wird und ein Sekundärrad 4, welches als Turbinenrad bezeichnet ist. Pumpen- und Turbinenrad 3 bzw. 4 bilden miteinander wenigstens einen torusförmigen Arbeitsraum 5, welcher mit einem Betriebsfluid, das Schmieröl ist befüllbar ist. Das Pumpenrad 3 wird von einem Zahnrad angetrieben. Dieses sitzt auf einer hier nicht dargestellten Welle. Zu diesem Zweck kämmt das Zahnrad mit einem drehfest mit dem Pumpenrad 3 gekoppelten Zahnrad 6.

Das Turbinenrad 4 ist auf einer Abtriebswelle 7 der hydrodynamischen Kupplung 1 angeordnet. Im dargestellten Ausführungsbeispiel ist das Turbinenrad 4 mit der Abtriebswelle 7 drehfest mittels kraft- bzw. formschlüssiger Verbindungen in Form von Schraubverbindungen, hier stellvertretend die Schraubverbindungen 8 und 9, gekoppelt.

Das Pumpenrad 3 ist über eine Lageranordnung 10, welche vorzugsweise zwei Kugellager 11 und 12 umfaßt, wenigstens mittelbar auf der Abtriebswelle 7 gelagert. Die Kugellager der Lageranordnung 10 sind als Schrägkugellager ausgeführt. Diese ermöglichen es, kombinierte Belastungen, d. h. Radial- und Axialkräfte besser als Rillenkugellager aufzunehmen. Das Pumpenrad 3 stützt sich über die Außenringe 13 bzw. 14 der Schrägkugellager 11 bzw. 12 und der Innenringe 15 bzw. 16 direkt auf der Abtriebswelle 7 ab. Die Anordnung dieser Lagerung erfolgt dabei in radialer Richtung unterhalb des vom Pumpenrad beschriebenen Arbeitsraumteiles. In axialer Richtung in Einbaulage betrachtet erfolgt die Anordnung der Lagerung vorzugsweise im Bereich der Trennebene, welche von der Beschaufelung von Pumenrad und Turbinenrad gebildet wird. Das Pumpenrad ist somit fliegend gelagert. Zur Realisierung der Drehmomentenaufnahme am Pumpenrad und Weitergabe über das Arbeitsöl an das Turbinenrad 4 erfolgen die Rotation von Pumpenrad 3 und den Außenringen 13 bzw. 14 der Schrägkugellager 11 bzw. 12 mit gleicher Drehzahl. Zwischen den Außenringen 13 bzw. 14 sowie dem Pumpenrad 3 sind zu diesem Zweck Preßsitze vorgesehen. Analoges gilt für die Abstützung des Zahnrades 6 über eine weitere Lageranordnung 17 auf der Abtriebswelle 7. Ganz wichtig ist die Dichtung 40, die in die Lageranordnung 10 integriert ist, und die die Lageranordnung nach außen hin abdichtet.

Die Ölversorgung des Arbeitsraumes 5 erfolgt im dargestellten Fall direkt über die Abtriebswelle 7. Zu diesem Zweck weist die Abtriebswelle 7 eine Bohrung 18 auf, die vorzugsweise koaxial zur Symmetrieachse A der Abtriebswelle 7 angeordnet ist. Diese Bohrung erstreckt sich von der Primärseite bis in etwa zur durch die Mittelsenkrechte durch den torusförmigen Arbeitsraum gelegten Ebene E. Von dieser Zentralbohrung 18 gehen weitere Verteilbohrungen 19 bzw. 20 ab, welche sich von der Zentralbohrung 18 bis an den Außenumfang 21 der Abtriebswelle 7 in radialer Richtung erstrecken. Über die Zentralbohrung 18 und die Verteilbohrungen 19 und 20 wird das Betriebsfluid in den torusförmigen Arbeitsraum 5 geleitet.

Gemäß der Erfindung ist die Lageranordnung gegen den Eintritt von Arbeitsöl abgedichtet, d.h. die Betriebsmittelzufuhr erfolgt an der Abdichtung vorbei. Außerdem ist der Lager-Innenraum mit Fett gefüllt, das einen hochviskosen Schmierstoff enthält, und das besonders für relativ niedrige Drehzahlen geeignet ist.

Die hydrodynamische Kupplung 1 wird von einem glockenförmigen Gehäuse 26 umschlossen. Dieses vorzugsweise als Tiefziehteil ausgeführt und mittels verschiedener Verbindungsmöglichkeiten vorzugsweise wenigstens mittelbar mit dem Zahnrad befestigt. Es besteht jedoch auch die theoretische, jedoch hier nicht im einzelnen dargestellte Möglichkeit, das Gehäuse entweder drehfest mit dem Pumpenrad 3 oder dem Turbinenrad 4 zu koppeln, wobei jedoch immer zwischen dem Pumpenrad 3 und dem Gehäuse 26 ein Zwischenraum 27 gebildet wird. Aufgrund der Kopplung zwischen Gehäuse 26 und Zahnrad 6 läuft ersteres im Betrieb der Kupplung bzw. beim Antrieb des Pumpenrades 3 mit um.

Während des Betriebes der Kupplung gelangt Arbeitsöl aus dem torusförmigen Arbeitsraum 5 in die Zwischenräume 27. Das Arbeitsöl ist damit nicht mehr der kreisförmigen und spülenden Strömung zwischen der Beschaufelung der beiden Schaufelräder, Pumpenrad und Turbinenrad, ausgesetzt sondern dann nur noch der durch die Rotation der Kupplung erzeugten Fliehkraft. Verunreinigungen im Arbeitsöl werden dann aufgrund ihres spezifisch höheren Gewichtes gegen die Innenwand 30 des Gehäuses 26 geschleudert, wo eine Ablagerungsgefahr zumindest immer dann besteht, wenn an dieser Innenseite 30 Unebenheiten in Form von Vorsprüngen, Vertiefungen oder Kanten vorgesehen sind bzw. diese eine ungenügende Oberflächengüte aufweist. Dies kann zum Berühren des Sekundärrades 4 mit dem Gehäuse 26 führen, wodurch sich eine starre Kopplung zwischen Primär- und Sekundärseite ergeben kann. Des weiteren können örtliche Ablagerungen an umlaufenden Gehäusen die Ausbildung von Unwuchten bedingen, welche in Biegeschwingungen resultieren. Zur Lösung . dieses Problemes sind im Pumpenrad 3 Öffnungen 31, beispielsweise in Form eines Verbindungskanales zwischen Schaufelgrund und Außenumfang des Schaufelrades, der derart ausgerichtet ist, daß dessen Lage sich wenigstens mit einer Richtungskomponente in Strömungsrichtung im Betriebszustand zwischen Pumpen- und Turbinenrad sowie im wesentlichen tangential zur Kontur des sich zwischen Pumpen- und Turbinenschaufelrad einstellenden Strömungsverlaufes beschreiben läßt, vorgesehen, welche die Bildung eines Nebenstromes vom Arbeitsraum 5 zum Zwischenraum 27 ermöglichen. Die Öffnungen 31 erstrecken sich dabei vorzugsweise von der Innenfläche des beschaufelten Teiles, insbesondere vom Schaufelgrund 32 zum Außenumfang 33 des Pumpenrades 3. Die Öffnungen 31 sind dabei derart ausgerichtet, daß wenigstens eine Richtungskomponente zur Beschreibung der Lage vorhanden ist, die im wesentlichen tangential zur Kontur des Arbeitsölkreislaufes im torusförmigen Arbeitsraum 5 im Betriebszustand betrachtet ausgerichtet ist. Die Richtung der tangentialen Komponente, welche zur Beschreibung der Ausrichtung der Öffnung 31 herangezogen werden kann, ist dabei immer in Richtung der Strömung im Kreislauf im torusförmigen Arbeitsraum 5 ausgerichtet.

Vorzugsweise sind eine Vielzahl von Öffnungen in Umfangsrichtung der hydrodynamischen Kupplung, insbesondere des Pumpenrades 3, vorgesehen, wobei diese vorzugsweise in gleicher Höhe und auf einer theoretisch gedachten Umfangslinie U_{L} am Umfang 33 des Pumpenrades 3 angeordnet sind. Die Abstände zwischen den einzelnen Öfffnungen 31 sind vorzugsweise konstant gewählt.

Die Öffnung 31 weist im dargestellten Fall vom Schaufelgrund bis zum Außenumfang 33 des Pumpenrades 3 einen konstanten Querschnitt auf und ist in Form einer Durchgangsbohrung ausgeführt. Jeder andere mögliche Querschnitt ist ebenfalls denkbar. Des weiteren besteht die hier im einzelnen nicht dargestellte Möglichkeit, die Öffnung 31 über ihre Erstreckung von der Schaufelradinnenfläche 31 des Pumpenrades 3 bis zum Außenumfang des Pumpenrades 3 mit unterschiedlichen Querschnitten zur Beeinflussung des darüber fließenden Nebenstromes zu versehen.

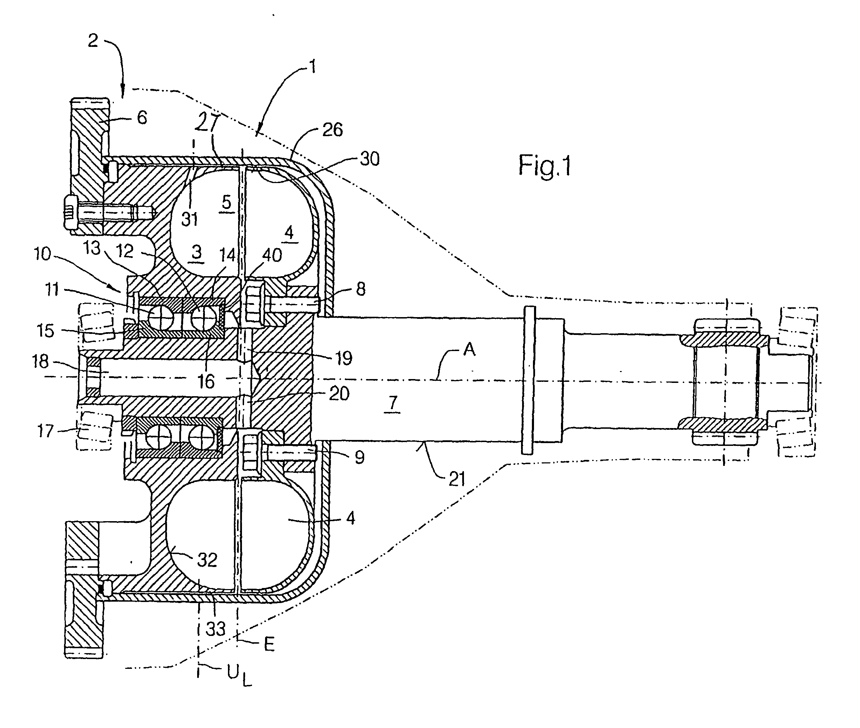

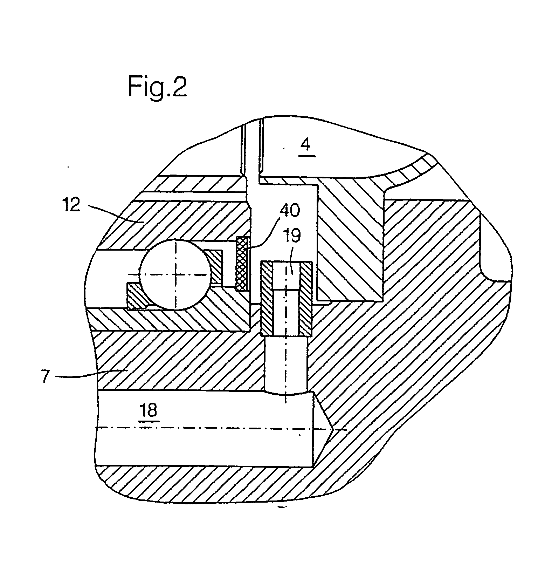

Fig. 2 zeigt in vergrößerter Darstellung einen Ausschnitt aus einer hydrodynamischen Kupplung. Von dieser ist wiederum u. a. das Turbinenrad 4 zu sehen, ferner ein Schrägkugellager 12 mit integrierter Dichtung 40.

Dem Arbeitsraum wird Betriebsmittel in Form von Öl durch eine Bohrung 18 in Antriebswelle 7 sowie durch Verteilbohrungen 19 zugeführt. Dabei ist die Anordnung derart getroffen, daß die Dichtung 40 nicht von Öl benetzt werden kann.

## Patentansprüche

1. Hydrodynamische Kupplung (1);
1.1 mit einem Pumpenschaufelrad (3) und einem Turbinenschaufelrad (4), welche miteinander wenigstens einen, mit Betriebsmittel aus einem Betriebsmittelzufuhrsystem befüllbaren torusförmigen Arbeitsraum (5) bilden wobei das Betriebsmittel Schmieröl ist;
1.2 mit einem, das Pumpenschaufelrad (3) wenigstens in axialer Richtung teilweise umschließenden Gehäuse (26);
1.3 das Gehäuse (26) bildet mit dem Pumpenschaufelrad (3) wenigstens einen Zwischenraum (27);
1.4 das Pumpenrad (3) ist über eine Lageranordnung (10) wenigstens mittelbar auf der Abtriebswelle (7) gelagert;
das Betriebsmittelzufuhrsystem umfaßt:
1.5 einen Betriebsmittelzufuhrraum, welcher radial unterhalb des torusförmigen Arbeitsraumes (5) angeordnet ist;
1.5.2 einen zentralen Betriebsmittelzufuhrkanal, welcher in der Antriebswelle (7) angeordnet ist;
1.5.3 wenigstens einen Verteilkanal (19, 20) welcher den zentralen Betriebsmittelzufuhrkanal (18) mit dem Betriebsmittelzufuhrraum verbindet.
**gekennzeichnet durch** die folgenden Merkmale:
1.6 die Lageranordnung (10) enthält Schmierfett;
1.7 die Lageranordnung (10) ist nach außen hin abgedichtet.

2. Hydrodynamische Kupplung (1) nach Anspruch 1, **dadurch gekennzeichnet, daß** das Betriebsmittel der Kupplung gleichzeitig als Schmieröl einer der hydrodynamischen Kupplung zugeordneten Verbrennungskraftmaschine fungiert.

3. Hydrodynamische Kupplung nach einem der Ansprüche 1 bis 2, **dadurch gekennzeichnet, daß** das Gehäuse (26) im Betriebszustand der Kupplung (1) umläuft.

4. Hydrodynamische Kupplung nach Anspruch 1 bis 3, **gekennzeichnet durch** eine solche Führung des Betriebsmittels vom und zum Arbeitsraum (5), daß die Abdichtung der Lageranordnung (10), insbesondere eine hierzu gehörende Dichtlippe, vom Betriebsmittel nicht benetzt wird.

5. Hydrodynamische Kupplung nach Anspruch 3 oder 4 **dadurch gekennzeichnet, daß** das Gehäuse (26) wenigstens mittelbar mit dem Pumpenrad (3) gekoppelt ist.

6. Hydrodynamische Kupplung nach Anspruch 3, **dadurch gekennzeichnet, daß** das Gehäuse (26) wenigstens mittelbar mit dem Turbinenschaufelrad (4) gekoppelt ist.

7. Hydrodynamische Kupplung nach einem der Ansprüche 1 bis 6, **dadurch gekennzeichnet, daß** der Verbindungskanal zwischen torusförmigen Arbeitsraum (5) und Zwischenraum (27) tangential in Richtung zur Kreislaufkontur des sich zwischen Pumpenschaufelrad (3) und Turbinenschaufelrad (4) im Betriebszustand einstellenden Strömungskreislaufes ausgerichtet ist.

8. Hydrodynamische Kupplung nach einem der Ansprüche 1 bis 7, **dadurch gekennzeichnet, daß** der Verbindungskanal (31) einen geradlinigen Verlauf frei von Richtungsänderungen aufweist.

9. Hydrodynamische Kupplung nach einem der Ansprüche 1 bis 8, **dadurch gekennzeichnet, daß** die Lageranordnung (10) unterhalb des vom Pumpenrad (3) beschreibbaren Arbeitsraumteiles erfolgt.

## Claims

1. A hydrodynamic coupling (1);
1.1 with a pump impeller (3) and a turbine impeller (4) which jointly form at least one toroidal working chamber (5) which can be filled with an operating medium from an operating medium supply system, with the operating medium being tube oil;
1.2 with a housing (26) enclosing the pump impeller (3) in the axial direction at least partly;
1.3 with the housing (26) forming at least an intermediate cavity (27) with pump impeller (3);
1.4 with the pump impeller (3) being held by way of a bearing arrangement (10) at least indirectly on the driven shaft (7);
with the operating medium supply system comprising:
1.5 an operating medium supply chamber which is arranged radially below the toroidal working chamber (5);
1.5.2 a central operating medium supply conduit which is arranged in the drive shaft (7);
1.5.3 at least one distribution conduit (19, 20) which connects the central operating medium supply channel (18) with the operating medium supply chamber;
**characterized by** the following features:
1.6 the bearing arrangement (10) comprises lubricating grease;
1.7 the bearing arrangement (10) is sealed towards the outside.

2. A hydrodynamic coupling (1) as claimed in claim 1, **characterized in that** the operating medium of the coupling acts simultaneously as the tube oil of an internal combustion engine associated with the hydrodynamic coupling.

3. A hydrodynamic coupling as claimed in one of the claims 1 to 2, **characterized in that** the housing (26) revolves in the operating state of the coupling (1).

4. A hydrodynamic coupling as claimed in claim 1 to 3, **characterized by** such a guidance of the operating medium from and to the working chamber (5) that the sealing of the bearing arrangement (10), especially a sealing lip belonging thereto, is not wetted by the operating medium.

5. A hydrodynamic coupling as claimed in claim 3 or 4, **characterized in that** the housing (26) is coupled at least indirectly with the pump impeller (3).

6. A hydrodynamic coupling as claimed in claim 3, **characterized in that** the housing (26) is coupled at least indirectly with the turbine impeller (4).

7. A hydrodynamic coupling as claimed in one of the claims 1 to 6, **characterized in that** the connecting conduit between the toroidal working chamber (5) and the intermediate cavity (27) is aligned tangentially in the direction to the circulation contour of the flow circulation obtained in the operating state between the pump impeller (3) and the turbine impeller (4).

8. A hydrodynamic coupling as claimed in one of the claims 1 to 7, **characterized in that** the connecting conduit (31) has a straight progress which is free from any changes in direction.

9. A hydrodynamic coupling as claimed in one of the claims 1 to 8, **characterized in that** the bearing arrangement (10) occurs below the working chamber section describable by the pump impeller (3).

## Revendications

1. Accouplement hydrodynamique (1);
1.1 avec une roue à pales (3) de la pompe et une roue à pales (4) de la turbine qui forment entre elles au moins une enceinte de travail (5) de forme torique destinée à contenir un fluide de travail provenant d'un système d'alimentation en fluide de travail, le fluide de travail étant une huile lubrifiante;
1.2 avec un carter (26) entourant en partie, suivant la direction axiale du moins, la roue à pales (3) de la pompe;
1.3 le carter (26) forme avec la roue à pales (3) de la pompe au moins un espace (27);
1.4 la roue de la pompe (3) est montée du moins indirectement sur l'arbre mené (7) par l'intermédiaire d'un ensemble de paliers (10);
le système d'alimentation en fluide de travail comprend:
1.5 une enceinte d'alimentation en fluide de travail qui est disposée radialement en dessous de l'enceinte de travail (5) de forme torique;
1.5.2 un canal central d'alimentation en fluide de travail qui est disposé dans l'arbre menant (7);
1.5.3 au moins un canal de distribution (19, 20) qui relie le canal central d'alimentation (18) en fluide de travail à l'enceinte d'alimentation en fluide de travail,
**caractérisé par** les particularités suivantes:
1.6 l'ensemble de paliers (10) contient de la graisse lubrifiante;
1.7 l'ensemble de paliers (10) est étanche par rapport à l'extérieur.

2. Accouplement hydrodynamique (1) selon la revendication 1, **caractérisé en ce que** le fluide de travail de l'accouplement fait en même temps office d'huile lubrifiante d'un moteur à combustion interne associé à l'accouplement hydrodynamique.

3. Accouplement hydrodynamique selon l'une quelconque des revendications 1 à 2, **caractérisé en ce que** le carter (26) tourne lorsque l'accouplement (1) est en état de fonctionnement.

4. Accouplement hydrodynamique selon l'une quelconque des revendications 1 à 3, **caractérisé en ce que** le fluide de travail partant de l'enceinte de travail (5) et s'acheminant vers celle-ci est dirigé de telle sorte que le joint d'étanchéité de l'ensemble de paliers (10), notamment une lèvre d'étanchéité qui en fait partie, n'est pas mouillé par le fluide de travail.

5. Accouplement hydrodynamique selon la revendication 3 ou 4, **caractérisé en ce que** le carter (26) est couplé du moins indirectement à la roue de la pompe (3).

6. Accouplement hydrodynamique selon la revendication 3, **caractérisé en ce que** le carter (26) est couplé du moins indirectement à la roue à pales (4) de la turbine.

7. Accouplement hydrodynamique selon l'une quelconque des revendications 1 à 6, **caractérisé en ce que** le canal de liaison entre l'enceinte de travail (5) de forme torique et l'espace (27) est orienté tangentiellement en direction du contour du circuit formé par le fluide circulant, en état de fonctionnement, entre la roue à pales (3) de la pompe et la roue à pales (4) de la turbine.

8. Accouplement hydrodynamique selon l'une quelconque des revendications 1 à 7, **caractérisé en ce que** le canal de liaison (31) est rectiligne et ne change pas de direction.

9. Accouplement hydrodynamique selon l'une quelconque des revendications 1 à 8, **caractérisé en ce que** l'ensemble de paliers (10) est prévu en dessous de la partie de l'enceinte de travail qui peut être décrite par la roue à pales (3) de la pompe.
